# EUROPÄISCHE PATENTANMELDUNG

(11) **EP 0 833 546 A1**
(43) Veröffentlichungstag der Anmeldung: **01.04.1998**
(21) Anmeldenummer: 96115625.4
(22) Anmeldetag: 28.09.1996
(51) Int. Cl.: H05B 3/03, C03B 5/027

(54) **Seitenhalter für eine Glasschmelzelektrode**

(71) Anmelder: Walther-Glas GmbH, 33014 Bad Driburg (DE)
(72) Erfinder: Rochell, Winfried, 33034 Brakel (DE); Forster, Kurt, 33014 Bad Driburg/Dringenberg (DE)
(74) Vertreter: Habbel, Hans-Georg, Dipl.-Ing.

(57) **Zusammenfassung**

Bei einem Halter für eine Glasschmelzelektrode, mit einem rohrförmigen Gehäuse, welches in der Gehäusewandung wenigstens einen Hohlraum zur Aufnahme eines Kühlraumes aufweist und welches ein erstes, "vorderes" Ende umfaßt, das in die Wandung, vorzugsweise die Seitenwandung, der Glasschmelzwanne einsetzbar ist sowie ein zweites, "hinteres" Ende, das außerhalb dieser Wandung verbleibt, schlägt die Erfindung vor, daß das Gehäuse aus einem einzigen Materialstück gefertigt ist.

## Beschreibung

Die Erfindung betrifft einen Halter nach dem Oberbegriff des Anspruches 1.

Derartige Halter sind beispielsweise aus der DE 38 15 558 A1 bekannt. Der bekannte Halter weist ein Gehäuse auf, welches mehrteilig aufgebaut ist und bei dem die einzelnen Bauteile miteinander durch Schrumpfpassungen oder Schweißnähte verbunden sind.

Die bekannten Halter weisen den Nachteil auf, daß die Temperaturwechselbeanspruchung des Gehäuses zu Rißbildungen in den Schweißnähten führt. Dies bedingt wiederum Undichtigkeiten des Gehäuses, so daß dieses Gehäuse ausgewechselt werden muß. Da üblicherweise die Elektrodenhalter das Gehäuse sowie Anschlußmittel für Kühlwasserzufluß und -rückfluß umfassen und demzufolge als sehr komplexes Bauteil ausgebildet sind, ist der Austausch dieses gesamten Halters erforderlich. Ein derartiger Austausch ist einerseits wegen der erheblichen Kosten dieses komplexen Bauteiles, andererseits wegen der dadurch erzwungenen Unterbrechung des Betriebsablaufes ein erheblicher Kostenfaktor.

Der Erfindung liegt die Aufgabe zugrunde, einen gattungsgemäßen Halter dahingehend zu verbessern, daß er einen möglichst störungsfreien und zuverlässigen Betrieb der Elektrode über lange Zeit ermöglicht sowie im Reparaturfall eine schnelle und kostengünstige Reparatur des Halters selbst ermöglicht.

Diese der Erfindung zugrundeliegende Aufgabe wird durch die Ausgestaltung gemäß dem kennzeichnenden Teil des Anspruches 1 gelöst.

Die Erfindung schlägt mit anderen Worten vor, das Gehäuse des Halters, welches das Kühlmedium aufnimmt, einteilig aus einem einzigen Materialstück herzustellen. Auf diese Weise wird selbst bei erheblichen Temperaturwechselbeanspruchungen sichergestellt, daß die dabei auftretenden Spannungen innerhalb eines einzigen homogenen Gehäuses problemlos aufgenommen werden können. Rißbildungen an Schweißnähten können also nicht mehr auftreten, so daß ein zuverlässiger störungsfreier Betrieb des Gehäuses ohne auftretende Undichtigkeiten über lange Zeit gewährleistet werden kann.

Diese einteilige Ausbildung des Gehäuses ohne zusätzliche Schweißstellen führt in zweiter Linie zu einem modularen Aufbau des gesamten Halters, bei dem weitere Komponenten beispielsweise über Schraubverbindungen oder Flanschverbindungen mit dem Gehäuse verbunden sind. Auf diese Weise wird im Reparaturfall das Austauschen einzelner Komponenten des Halters möglich, so daß sich gegenüber einem kompletten Austausch des gesamten Halters eine wesentlich preisgünstigere Reparatur ergibt.

Zudem kann, wenn nicht das Gehäuse selbst betroffen ist, ein Auswechseln von Bauteilen des Halters im Einbauzustand vorgenommen werden, d. h. während das Gehäuse in der Wandung der Schmelzwanne verbleibt. Die Schmelzwanne muß also nicht geleert und der Schmelzvorgang unterbrochen werden, was eine erhebliche Betriebsstörung darstellt.

Der Hohlraum zur Aufnahme des Kühlmediums im Gehäuse des Halters kann vorteilhaft durch eine Ringnut gebildet sein, welche sich beispielsweise von einer Stirnwand des rohrförmigen Gehäuses in die Gehäusewandung erstreckt.

Die Kühlwirkung des Gehäuses kann insbesondere dadurch verbessert sein, daß die Ringnut wenigstens durch eine Trennwand unterbrochen ist, so daß sich eine gerichtete Strömung durch die entsprechende Anordnung von Zu- und Abfluß erzielen läßt. Zu diesem Zweck kann in der Ringnut ein Trennstab oder ein Trennblech vorgesehen sein.

Insbesondere kann eine sehr gute und gleichmäßige Kühlung des gesamten Gehäuses dadurch erzielt werden, daß ein mäanderförmiger Kühlkanal in der Gehäusewandung vorgesehen ist. Dieser kann durch eine Mehrzahl von Trennstäben gebildet sein, die in der Ringnut angeordnet sind.

Das Gehäuse kann an seinem hinteren Ende vorteilhaft einen umlaufenden Flansch an seiner Außenseite aufweisen. Auf diese Weise können weitere Anbauteile an das Gehäuse angeschlossen werden, ohne daß hierzu Schweißverbindungen oder ähnliche Verbindungsmittel benötigt würden, die angesichts der Temperaturwechselbeanspruchung zur Rißbildung führen könnten.

Vorteilhaft weist das Gehäuse einen separaten Verschlußdeckel auf, der ebenfalls nicht mit dem Gehäuse verschweißt ist, sondern von außen an das hintere Ende des Gehäuses ansetzbar ist. Um einen Kühlkreislauf zu ermöglichen, kann der Deckel Anschlüsse für einen Kühlmittelzufluß und -abfluß aufweisen. In der Mitte weist der Deckel eine Öffnung zum Einführen der Elektrode in das Gehäuse auf, so daß sich insgesamt ein ringförmiger Verschlußdeckel ergibt.

Um die beim Verlängern der Elektrode von hinten an ein bestehendes Elektrodenstück angeschraubten zusätzlichen Elemente der Elektrode sicher zu haltern, kann an dem Verschlußdeckel ein Rohr oder eine Rinne befestigt sein, die einerseits diese angeschraubten Elektrodenelemente schützt und andererseits eine Stütze zum Abstützen und Zentrieren der Elektrodenelemente trägt. Hierdurch wird eine korrekte Ausrichtung der gesamten Elektrode einschl. der in das Innere der Schmelzwanne ragenden Anteile der Elektrode sichergestellt.

Ein Temperatursensor kann im Gehäuse angeordnet sein, der bei Erreichen einer vorgegebenen Temperatur eine automatische Abschaltung der Elektrode ermöglicht und auf diese Weise Schäden durch Überhitzung verhindert.

Ein Ausführungsbeispiel der Erfindung wird anhand der Zeichnungen im folgenden näher erläutert. Dabei zeigt
- Fig. 1: einen Längsschnitt durch den erfindungsgemäßen Halter,
- Fig. 2: einen Querschnitt durch den Halter entlang der Linie A - A in Fig. 1 und
- Fig. 3: einen Querschnitt durch den Halter entlang der Linie B - B von Fig. 1.

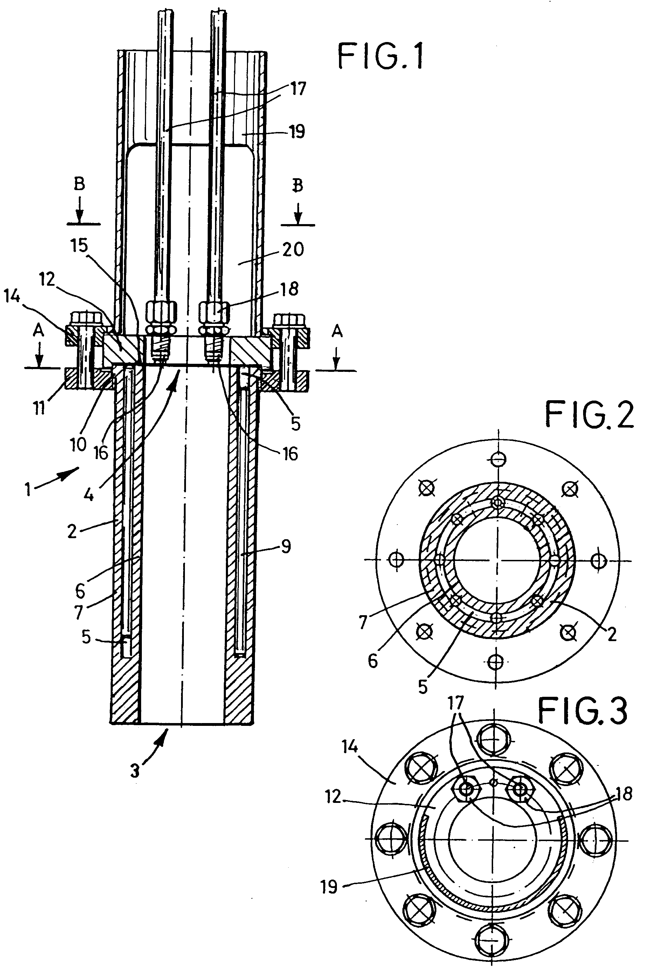

In Fig. 1 ist mit 1 allgemein ein Halter für sogenannte Seitenelektroden dargestellt. Der Halter 1 umfaßt ein Gehäuse 2, welches ein vorderes Ende 3 aufweist, mit welchem das Gehäuse 2 in die Seitenwand einer Glasschmelzwanne eingeführt werden kann. Das gegenüberliegende Ende des Gehäuses 2 kann als hinteres Ende 4 bezeichnet werden und verbleibt außerhalb der Wandung der Glasschmelzwanne.

Wie aus Fig. 1 ersichtlich, besteht das Gehäuse 2 aus einem einzigen Werkstück, weist also keinerlei Schrumpfpassungen oder Schweißnähte auf.

Fig. 2 zeigt, daß das Gehäuse 2 eine Ringnut 5 aufweist, so daß das Gehäuse 2 über einen großen Höhenbereich, der aus Fig. 1 ersichtlich ist, sowohl eine Innenwand 6 als auch eine Außenwand 7 umfaßt. Da die Ringnut 5 nicht ganz bis zum vorderen Ende 3 des Gehäuses 2 geführt ist, verbleibt hier ein Bereich mit einteiliger Gehäusewandung.

Fig. 1 macht deutlich, daß Trennstäbe 9 in der Ringnut 5 angeordnet sind, so daß sich ein Kühlkanal in der Wandung des Gehäuses 2 für eine gerichtete Strömung des Kühlmediums ergibt.

An seinem hinteren Ende 4 weist das Gehäuse 2 einen Flansch 10 auf. Dieser Flansch 10 könnte so groß ausgebildet sein, daß er zur Aufnahme von Gewindebohrungen geeignet ist. Im dargestellten Ausführungsbeispiel jedoch ist der Flansch 10 relativ klein bemessen und ermöglicht es, eine Gehäusemanschette 11 anzusetzen, die ihrerseits die Gewindebohrungen aufweist und eine Flanschverbindung zwischen dem Gehäuse 2 und weiteren Bauteilen ermöglicht. Hierdurch wird das Gehäuse 2 preisgünstiger herstellbar und im Reparaturfall kann die Gehäusemanschette 11 wiederverwendet werden.

Mit Hilfe der Gehäusemanschette wird die Befestigung eines Verschlußdeckels 12 möglich, der mit Hilfe einer Deckelmanschette 14 an das Gehäuse 2 angeflanscht ist, wobei eine zwischen dem Gehäuse 2 und dem Verschlußdeckel 12 angeordnete Dichtung 15 den Austritt von Kühlwasser zwischen diesen beiden Bauteilen verhindert.

Der Deckel 12 weist zwei Gewindebohrungen 16 auf, die den Anschluß von Zufluß- und Abflußleitungen 17 für das Kühlwasser mittels Schraubanschlüssen 18 ermöglichen. Der Trennstab 9, der zwischen den beiden Gewindebohrungen 16 des Verschlußdeckels 12 im Gehäuse 2 angeordnet ist, kann über die gesamte Höhe der Ringnut 5 verlaufen, um einen Kurzschluß im Kühlwasserkreislauf zu verhindern.

In das Gehäuse 2 kann ein Temperatursensor eingesetzt werden, der die Kühlwassertemperatur oder die Gehäusetemperatur überwacht und der mit einer Schaltung verbunden sein kann, die bei Überschreiten einer zulässigen Höchttemperatur die Elektrode abschaltet. Eine entsprechende Bohrung für die elektrische Anbindung des Temperatursensors ist im Verschlußdeckel 12 zwischen den Gewindebohrungen 16 vorgesehen.

An den Verschlußdeckel 12 ist ein rohrförmiger Stutzen 19 angeschweißt, der den außerhalb des Gehäuses 2 befindlichen Teil der Elektrode stützt und zentriert. Da der Innendurchmesser des Stutzens 19 größer als der Außendurchmesser der Elektrode ist, weist der Stutzen 19 eine in Fig. 1 nicht dargestellte Stütze beispielsweise in Form eines Reduzierringes auf, der für die genaue Zentrierung und Abstützung der Elektrodenelemente sorgt, die sich außerhalb des Gehäuses 2 und außerhalb der Schmelzwanne befinden. Um die Schraubanschlüsse 18 der Zufluß und Abflußleitungen 17 gut erreichen zu können, weist der Stutzen 19 ein Fenster 20 auf, durch welches beispielsweise Werkzeuge geführt werden können.

Durch den modularen Aufbau des Halters 1 ist das preisgünstige Auswechseln einzelner Komponenten möglich. Aufgrund des einteilig ausgestalteten Gehäuses 2 ist ein Wasseraustritt aus dem Kühlkreislauf in die Glasschmelze nicht mehr möglich. Selbst bei versagender Dichtung 15 tritt Kühlwasser dort allenfalls nach außen, nicht jedoch in die Glasschmelze aus.

Durch Kontakt mit der Glasschmelze und ggf. durch Kalkablagerungen innerhalb des Kühlmittelkanals, der einen relativ geringen Querschnitt aufweist, stellt das Gehäuse 2 ein Verschleißteil dar, das relativ preisgünstig ausgewechselt werden kann. Zudem ist es möglich, durch Lösung der Flanschverbindung den Verschlußdeckel 12 zu entfernen und im eingebauten Zustand des Gehäuses 2 an den Kühlmittelkanal zu gelangen, so daß dieser mechanisch und/oder chemisch gereinigt und von Kalkablagerungen befreit werden kann. Da das Gehäuse 2 unterhalb des Spiegels der Schmelze angeordnet ist, würde ein Ausbau des Gehäuses 2 das Ablassen der Schmelze aus der Schmelzwanne erfordern und damit eine erhebliche Betriebsunterbrechung darstellen. Beim Stand der Technik sind die aus mehreren Einzelteilen zusammengesetzten und verschweißten Gehäuse nur komplett auswechselbar, wenn sich deren Kühlkanäle durch Kalkablagerungen des Kühlwassers zugesetzt haben sollten. Da in diesem Fall eine Durchströmung des Kühlkanales nicht mehr möglich ist, ist eine chemische Reinigung des Kanales häufig nicht möglich und ein mechanischer Zugang zum Kühlkanal ist aufgrund der verschweißten Gehäusekonstruktion ebenfalls nicht möglich. Daher ist beim Stand der Technik ein Auswechseln des gesamten Gehäuses und damit die notwendige Betriebsunterbrechung unumgänglich.

## Patentansprüche

1. Halter für eine Glasschmelzelektrode, mit einem rohrförmigen Gehäuse, welches in der Gehäusewandung wenigstens einen Hohlraum zur Aufnahme eines Kühlmediums aufweist und welches ein erstes, "vorderes" Ende umfaßt, das in die Seitenwandung der Glasschmelzwanne einsetzbar ist sowie ein zweites, "hinteres" Ende, das außerhalb dieser Wandung verbleibt, dadurchgekennzeichnet, daß das Gehäuse (2) aus einem einzigen Materialstück gefertigt ist, wobei der Hohlraum zur Aufnahme des Kühlmediums durch eine Ringnut (5) gebildet ist, welche sich koaxial zur Längsachse des Gehäuses (2) über einen Teil der Gehäuselänge erstreckt, und wobei mehrere Trennstäbe (9) in der Ringnut (5) angeordnet sind, und wobei die Trennstäbe (9) einen mäanderförmigen Kühlkanal schaffen.

2. Halter nach Anspruch 1, gekennzeichnet durch einen außen umlaufenden Flansch (10) am hinteren Ende (4) des Gehäuses (2), welcher das Anflanschen weiterer Bauteile an das Gehäuse (2) ermöglicht.

3. Halter nach Anspruch 1 oder 2, gekennzeichnet durch einen Verschlußdeckel (12), der das hintere Ende (4) des Gehäuses (2) abdeckt und der eine Öffnung für die einzusetzende Elektrode aufweist und der Anschlußmittel (Schraubanschlüsse 18) zum Anschluß von Zufluß- und Rückflußleitungen (17) des Kühlmittels aufweist und der Öffnungen (Gewindebohrungen 16) umfaßt, die für das Kühlmittel eine Verbindung von den Anschlußmitteln zu der Ringnut (5) schaffen.

4. Halter nach Anspruch 3, dadurch gekennzeichnet, daß an dem Verschlußdeckel (12) eine Stütze zum Zentrieren und Abstützen der Elektrode befestigt ist.

5. Halter nach Anspruch 4, dadurch gekennzeichnet, daß ein rohrförmiger oder rinnenförmiger Stutzen (19) vorgesehen ist, der die Stütze trägt.

6. Halter nach einem der vorhergehenden Ansprüche, dadurch gekennzeichnet, daß ein Temperatursensor vorgesehen ist, der sich in das Gehäuse (2) erstreckt.
